# EUROPÄISCHE PATENTSCHRIFT

(11) **EP 2 882 600 B1**
(45) Veröffentlichungstag und Bekanntmachung des Hinweises auf die Patenterteilung: **26.04.2017**
(21) Anmeldenummer: 13741787.9
(22) Anmeldetag: 29.07.2013
(51) Int. Cl.: B60B 3/04, B60B 1/14

(54) **RADKONSTRUKTION FÜR EIN AUTOMOBIL**
WHEEL STRUCTURE FOR AN AUTOMOBILE
STRUCTURE DE ROUE D'UNE AUTOMOBILE

(30) Priorität: 08.08.2012 CH 12982012
(43) Veröffentlichungstag der Anmeldung: 17.06.2015
(73) Patentinhaber: Cool Wheels AG, 8803 Rüschlikon (CH)
(72) Erfinder: BRAUNSCHWEILER, Hans Georg, CH-8803 Rüschlikon (CH)
(74) Vertreter: Rentsch Partner AG
(86) Internationale Anmeldenummer: PCT/EP2013/065901
(87) Internationale Veröffentlichungsnummer: WO 2014/023598

(56) Entgegenhaltungen:
- EP-B1- 0 935 536
- DE-B- 1 100 487
- US-A- 1 556 888
- US-A1- 2001 013 721

## Beschreibung

### TECHNISCHES GEBIET

Die vorliegende Erfindung betrifft eine Radkonstruktion für ein Automobil mit einem Felgenkranz, mit einem zentralen Teil und mit Speichenelementen, die mit dem Felgenkranz und dem zentralen Teil einzeln verbindbar sind. Die Speichenelemente sind mit Durchgangslöchern für Radschrauben oder -bolzen und der zentrale Teil mit Löchern zum Eindrehen oder Durchstecken derselben Radschrauben oder -bolzen versehen. Die Durchgangslöcher der Speichenelemente bilden einen ersten Lochkranz, wenn die Speichenelemente mit dem Felgenkranz verbunden sind. Die Löcher im zentralen Teil bilden einen zweiten Lochkranz.

### STAND DER TECHNIK

Eine solche Radkonstruktion ist aus EP 0 935 536 B1 bekannt. Bei der bekannten Radkonstruktion sind die als Profilelemente bezeichneten Speichenelemente mit dem Felgenkranz verschweisst. Als zentrales Teil ist entweder eine Platte vorgesehen oder, unter Verzicht auf eine solche Platte, eine Radnabe, d.h. ein Teil der Achskonstruktion des Automobils. Sofern eine Radnabe eines Automobils das zentrale Teil bildet, ist die Radkonstruktion erst komplett und ausgesteift, wenn sie fahrbereit montiert ist. Durch Einbezug der Radnabe in die Radkonstruktion ergibt sich eine nicht unerhebliche Gewichtseinsparung. In beiden Fällen werden die Speichenelemente bei ihrer Verschraubung mit dem zentralen Teil im Winkel gegenüber der Radachse so verdrückt, dass sich eine zentrale Öffnung zwischen den ihnen nach Art eines Spannfutters verengt, was zur Mittenzentrierung der Radkonstruktion ausgenutzt wird. Zum Anderen werden die Schweissverbindungen zwischen den Speichenelementen und dem Felgenkranz dabei derart auf Torsion belastet, dass beim Fahren auftretende Wechselbeanspruchungen der Schweissverbindungen in den Druckbereich zu verschoben werden, was sich grundsätzlich günstig auf die Haltbarkeit der Schweissverbindungen auswirken sollte.

### BESCHREIBUNG DER ERFINDUNG

Die Erfindung stellt sich die Aufgabe, eine Radkonstruktion der eingangs genannten Art konstruktiv zu verbessern, insbesondere hinsichtlich einer einfacheren Herstellung und/oder ihrer Belastbarkeit und Haltbarkeit. Diese Aufgabe wird gelöst durch eine Radkonstruktion mit den Merkmalen des Anspruchs 1. Die erfindungsgemässe Radkonstruktion ist demnach dadurch gekennzeichnet, dass der Durchmesser des ersten Lochkranzes kleiner als der Durchmesser des zweiten Lochkranzes ist, wenn die Speichenelemente nicht mit dem zentralen Teil verbunden sind, und dass der Durchmesser des ersten Lochkranzes dem Durchmesser des zweiten Lochkranzes entspricht, wenn die Speichenelemente auch mit dem zentralen Teil verbunden sind.

Durch diese Ausbildung sind die Speichenelemente in Radialrichtung nach aussen gegen den Felgenkranz auf Druck belastet bzw. vorgespannt, wenn sie auch mit dem zentralen Teil verbunden sind. Dies ermöglicht es, die Verbindung zwischen den Speichenelementen und dem Felgenkranz konstruktiv einfach auszubilden. Eine besonders einfache Verbindung ist beispielsweise eine Verschraubung mittels axial ausgerichteter Befestigungsschrauben. Die auf solche Verschraubungen beim Fahren einwirkenden Wechselbelastungen werden durch den radial nach aussen wirkenden Druck in einen für ihre Stabilität und Haltbarkeit günstigeren Bereich verschoben. Es wird damit, ähnlich wie bei EP 0 935 536 B1, von einer Vorspannung der Verbindungen Gebrauch gemacht, allerdings in unterschiedlicher Weise und effektiver, da die Wechselbelastungen im Wesentlichen radial wirken: Druck beim Bodenkontakt, Zug auf der Gegenseite.

Anders als bei EP 0 935 536 B1 erweitert sich zudem die zentrale Öffnung zwischen den Speichenelementen bei der Verbindung der Speichenelemente mit dem zentralen Teil statt sich zu verkleinern. Eine Mittenzentrierung wie bei EP 0 935 536 B1 ist auch verzichtbar, da die sie häufig nur als Montagehilfe dient und die eigentliche Zentrierung über die Radschrauben oder -bolzen erfolgt.

Durch die erfindungsgemässe Ausbildung ergibt sich als weiterer Vorteil eine radiale Zentrierung des Felgenkranzes. Felgenkränze für Automobilräder werden heute meist durch Rollen oder Drücken hergestellt. Die geometrischen radialen Ungenauigkeiten und Abweichungen von der kreisrunden Form liegen dabei im Bereich einiger Millimeter. Durch die radiale Vorspannung werden die Räder zu Kreisen kalibriert.

Das zentrale Teil kann, wie bei EP 0 935 536 B1 auch schon vorgesehen, eine Radnabe und dadurch ein Teil der Achskonstruktion des Automobils sein, sofern die Durchgangslöcher an den Speichenelementen jeweils eine Senkung in Form einer Kugel- oder Kegelbundfläche aufweisen und sofern ihr Durchmesser so gross bemessen ist, dass sich sie sich mit den entsprechenden Löchern des ersten Lochkranzes in der Nabe auch dann jeweils vollständig überdecken, wenn die Speichenelemente nur mit dem Felgenkranz, nicht aber auch mit dem zentralen Teil verbunden sind. Er versteht sich, dass zur Verschraubung der Speichenelemente in diesem Fall Radschrauben oder Radbolzen bzw. Muttern für Radbolzen zu verwenden sind, die mit einer entsprechenden Kugel- oder Kegelbundfläche versehen sind. Beim Anziehen der Schrauben oder Muttern werden deren Kugel- oder Kegelbundflächen in die entsprechenden Senkungen hineingezogen. Dabei wird der Durchmesser des durch die Durchgangslöcher an den Speichenelementen gebildeten zweiten Lochkranzes auf den Durchmesser des ersten Lochkranzes aufgeweitet und die erwähnte Vorspannung aufgebaut.

Als zentrales Teil kann andererseits auch eine zur Montage auf einer Nabe einer Achskonstruktion eines Automobils geeignete Platte vorgesehen sein, wobei in diesem Fall die Platte einen Abschnitt in Form eines Aussenkonus aufweist, wobei die Speichenelemente gemeinsam einen entsprechenden Innenkonus bilden, und wobei die Platte mit ihrem Aussenkonus in diesen Innenkonus unter Aufweitung des Durchmessers des durch die Durchgangslöcher an den Speichenelementen gebildeten zweiten Lochkranzes auf den Durchmesser des ersten Lochkranzes eingepresst ist.

Gemäss einer bevorzugten Ausbildung sind bei der erfindungsgemässen Radkonstruktion die Speichenelemente mit axial ausgerichteten Befestigungsschrauben mit dem Felgenkranz verschraubt. Am Felgenkranz kann hierzu eine einfach herzustellende, radial nach innen vorspringende Rippe ausgebildet sein.

Weiter vorzugsweise sind die Speichenelemente mit jeweils einem Paar von Speichen versehen, welche am zentralen Teil in einen mit einem der Durchgangslöcher versehenen Speichenkopf übergehen. Am Felgenkranz können diese Speichen über einen Quersteg miteinander verbunden sein. Im Quersteg können dann ebenfalls Durchgangslöcher für die Befestigungsschrauben vorgesehen sein.

Gemäss einer weiteren bevorzugten Ausbildung sind die Speichenelemente einstückig ausgeführt. Im Hinblick auf die aufzunehmenden Kräfte ist es günstig, wenn die Speichen in Axialrichtung eine grössere Ausdehnung aufweisen als in Umfangsrichtung.

### KURZE BESCHREIBUNG DER ZEICHNUNGEN

Es zeigen:
Fig. 1 eine Anordnung mit Felgenkranz mit fünf Speichenelementen in Aufsicht zur Herstellung einer erfindungsgemässen Radkonstruktion;
Fig. 2a eine Radkonstruktion mit dem Felgenkranz und den Speichenelementen von Fig. 1, wobei die Speichenelemente mittels Radschrauben mit einer Radnabe als zentralem Teil verbunden sind;
Fig. 2b die Radnabe;
Fig. 3 im Schnitt (A-A) den Überlappungsbereich eines Speichenelements mit der Radnabe als zentralem Teil mit noch loser Radschraube;
Fig. 4 den Überlappungsbereich mit angezogener Radschraube;
Fig. 5a eine Fig. 2a entsprechende Radkonstruktion, wobei die Speichenelemente mit einer Platte als zentralem Teil verbunden sind;
Fig. 5b die zentrale Platte;
Fig. 6 im Schnitt (B-B) den Überlappungsbereich eines Speichenelements mit der Platte als zentralem Teil vor ihrer gegenseitigen Verbindung; und
Fig. 7 den Überlappungsbereich bei hergestellter Verbindung.

In den Figuren sind von jeweils mehrfach vorhandenen gleichen Teilen jeweils nur eines dieser Teile mit einem Bezugszeichen versehen.

### WEGE ZUR AUSFÜHRUNG DER ERFINDUNG

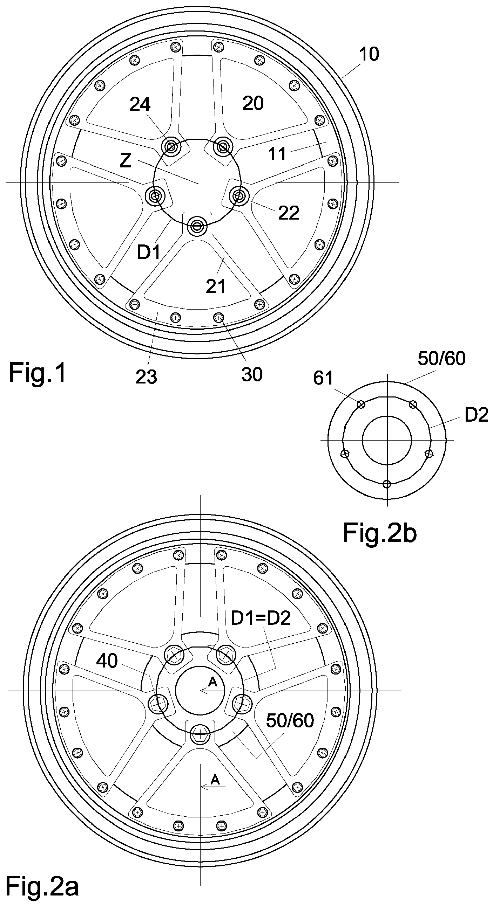

Bei der Anordnung von Fig. 1 bezeichnet 10 einen Felgenkranz und 20 fünf gleiche und unter gleichen Relativwinkeln um das Zentrum Z verteilte Speichenelementen. Die Speichenelemente 20 weisen jeweils ein Paar von Speichen 21 auf, welche gegen das Zentrum Z hin in einen Speichenkopf 22 übergehen und am Felgenkranz 10 über einen Quersteg 23 miteinander verbunden sind. Im Speichenkopf 22 ist jeweils ein Durchgangsloch 24 vorhanden. Mit jeweils zwei axial ausgerichteten Befestigungsschrauben 30 sind die Querstege 23 mit einer nach innen radial vorstehenden Rippe 11 des Felgenkranzes 10 verschraubt. Allein über diese Verbindung mit dem Felgenkranz 10 sind die Speichenelemente 20 miteinander verbunden. Die Speichenköpfe 22 liegen dabei frei ohne gegenseitige Berührung, wobei die Durchgangslöcher 24 in den Speichenköpfen 22 einen ersten Lochkranz mit einem Durchmesser D1 bilden.

In Fig. 2a sind die Speichenköpfe 22 mittels Radschrauben 40 mit einem zentralen Teil 50 verschraubt, wobei dieses zentrale Teil gemäss einer ersten bevorzugten Ausführungsform hier eine Radnabe 60 einer Achskonstruktion eines Automobils ist. Fig. 2b zeigt die Radnabe 60 gesondert dargestellt. Die Radnabe 60 ist mit Gewindelöchern 61 versehen, wobei dies Gewindelöcher einen zweiten Lochkranz mit einem Durchmesser D2 bilden. Erst durch die Verschraubung mit der Radnabe 60 ist aus der Anordnung von Fig. 1 eine zum Fahren geeignete Radkonstruktion entstanden. Die Radnabe 60, die üblicherweise der Achskonstruktion des Automobils zugerechnet wird, bildet hier also gleichzeitig einen Teil der Radkonstruktion.

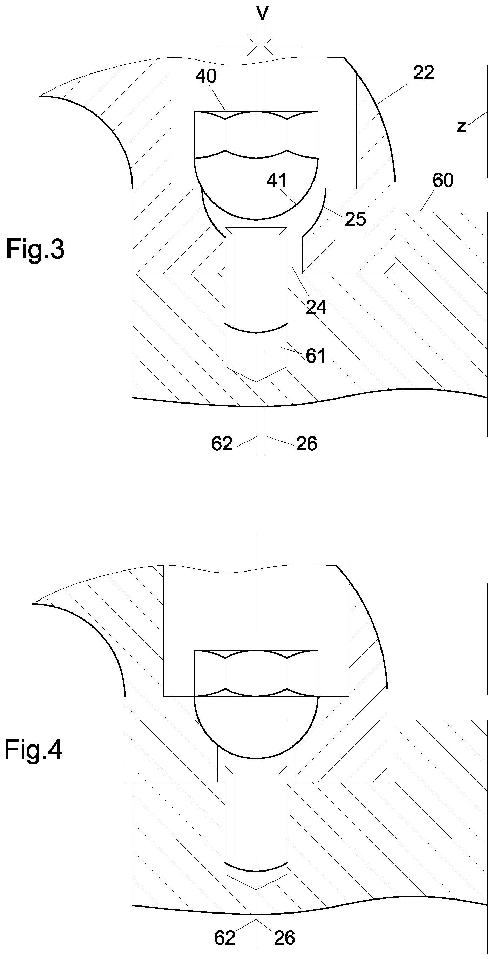

Fig. 3 zeigt im Schnitt (A-A) den Überlappungsbereich eines der Speichenelemente 20 mit der Radnabe 60 bei noch loser Radschraube 40, wobei die Verhältnisse bezüglich der anderen Speichenelemente 20 gleich sind. Die Radschraubei40 ist nur ein Stückweit in eine der Gewindebohrungen 61 der Radnabe 60 eingedreht ist. An der Unterseite ihres Kopfes ist die Radschraube 40 mit einer Kugelbundfläche 41 versehen. Eine entsprechende Kugelbundfläche weist eine Senkung 25 des Durchgangslochs 24 im Speichenkopf 22 auf. Die mit 26 bezeichnete Achse des Durchgangslochs 24 ist gegenüber der mit 62 bezeichneten Achse der Gewindebohrungen 61 in der Radnabe 60 etwas versetzt angeordnet (Versatz V). Das liegt daran, dass der Durchmesser D1 des durch die Durchgangslöcher 24 gebildeten ersten Lochkranzes etwas kleiner ist als der Durchmesser D2 des durch die Gewindelöcher 61 in der Radnabe 60 gebildeten zweiten Lochkranzes, solange Speichenelemente 20 mit der Radnabe 60 noch nicht fest verschraubt sind. Damit die Radschrauben 40 trotz des Versatzes V der beiden Achsen 26 und 62 gegeneinander in die Gewindelöcher 61 der Radnabe 60 eingeschraubt werden können, ist der Durchmesser der Durchgangslöcher 24 über-gross gewählt und zwar mindestens so gross, dass sich die Durchgangslöcher 24 mit den Gewindelöchern 61 unter Berücksichtigung von Toleranzen jeweils vollständig überdecken.

Beim Anziehen der Radschrauben 40 werden die Kugelbundflächen 41 der Radschrauben 40 unter Verschiebung der Speichenelemente 20 um den Versatz V nach aussen in die entsprechenden Senkungen 25 der Durchgangslöcher 24 hineingezogen. Dabei wird der Durchmesser D1 des durch die Durchgangslöcher 24 gebildeten ersten Lochkranzes auf den Durchmesser D2 des durch die Gewindebohrungen 61 in der Radnabe 60 gebildeten zweiten Lochkranzes aufgeweitet. Da der Felgenkranz 10 dem Widerstand entgegensetzt, wird eine Spannung bzw. Vorspannung zwischen dem Felgenkranz 10 und der Radnabe 60 als zentralem Teil 50 aufgebaut.

Fig. 4 zeigt in gleicher Darstellung wie Fig. 3 den Überlappungsbereich des Speichenelements 20 mit der Radnabe 60 bei fest angezogener Radschraube 40. Die Achse 26 des Durchgangslochs 24 im Schraubenkopf 22 fällt nunmehr mit der Achse 62 der Gewindebohrungen 61 in der Radnabe 60 zusammen.

Die erzeugte Vorspannung wirkt sich insbesondere günstig auf die Haltbarkeit der Schraubverbindungen zwischen den Querstegen 23 der Speichenelemente 20 und der Rippe 11 des Felgenkranzes 10 aus. Wechselnde Zug- und Druckbelastungen, wie sie beim Abrollen auf diese Schraubverbindungen an sich einwirken, werden durch die Vorspannung in den Druckbereich verschoben. Mit reinen Druckkräften sind die Schraubverbindungen stärker belastbar als mit wechselnden Zug- und Druckkräften. Insbesondere lassen von den Rändern der Durchgangsbohrungen für die Befestigungsschrauben 30 im Material der Querstege 23 oder der Rippe 11 ausgehende Risse, wie sie unter längerer Dauerbelastung gegebenenfalls auftreten können, wirksam vermeiden.

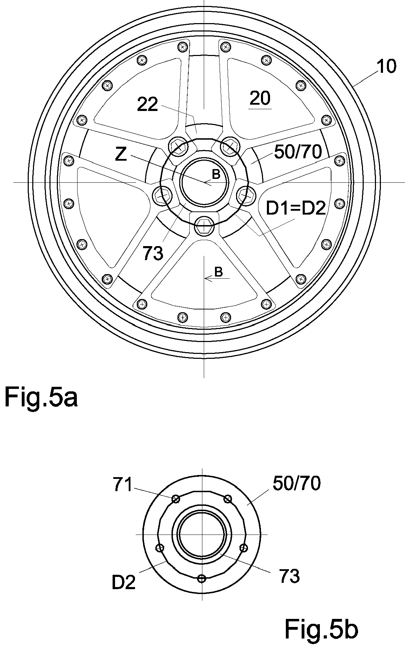

Fig. 5a zeigt die eine weitere Ausführungsform, bei welcher als zentrales Teil 50 eine zur Montage auf einer Radnabe eines Automobils geeignete, mit 70 bezeichnete Platte zwischen die Speichenelemente 20 eingepresst ist. Die Platte 70 vervollständigt die Anordnung von Fig. 1 wiederum erst zu einer zum Fahren geeigneten Radkonstruktion. Fig. 2b zeigt die Platte 70 gesondert dargestellt. Die Platte 70 ist mit Durchgangslöchern 71 für Radschrauben versehen, welche einen zweiten Lochkranz mit einem Durchmesser D2 bilden.

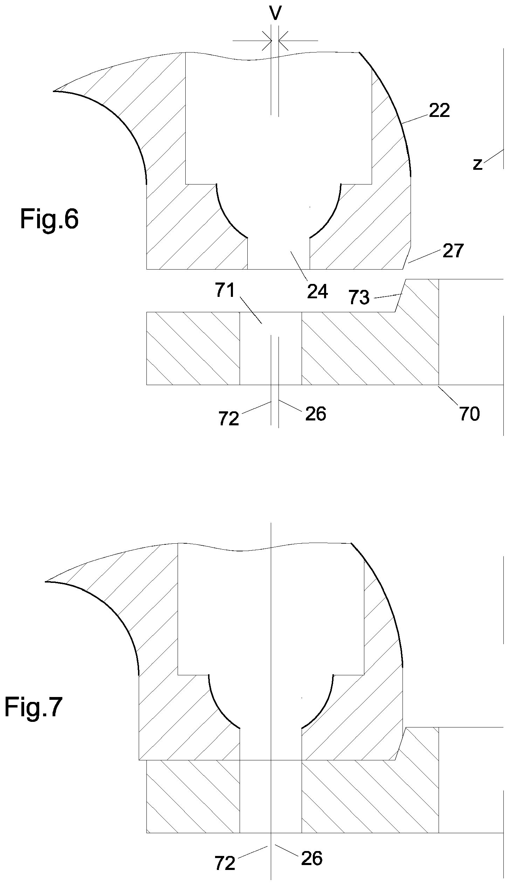

Fig. 6 zeigt im Schnitt (B-B) den Überlappungsbereich eines der Speichenelemente 20 mit der Platte 70 in einem Zustand vor deren gegenseitiger Verbindung, wobei die Verhältnisse bezüglich der anderen Speichenelemente 20 gleich sind.

Die Platte 70 weist einen abgeschrägten Abschnitt beispielsweise in Form eines Aussenkonus 73 auf. Die Speichenelemente 20 bilden gemeinsam durch eine gegengleiche Abschrägung an ihren Speichenköpfen 22 einen entsprechenden Innenkonus 27. Die mit 26 bezeichnete Achse des Durchgangslochs 24 im Schraubenkopf 22 ist gegenüber der mit 72 bezeichneten Achse des Durchganglochs 71 etwas versetzt angeordnet. Dasselbe gilt für die anderen Durchgangslöcher 24 in den Speichenköpfen 22 der anderen Speichenelemente 20 sowie auch für die anderen Durchgangslöcher 71 in der Platte 70. Das liegt daran, dass der Durchmesser D1 des durch die Durchgangslöcher 24 gebildeten ersten Lochkranzes etwas kleiner ist als der Durchmesser D2 des durch die Durchgangslöcher 71 in der Platte 70 gebildeten zweiten Lochkranzes, solange die Speichenelemente 20 mit der Platte 70 noch nicht fest verbunden sind.

Zur Verbindung der Speichenelemente 20 mit der Platte 70 wird diese mit ihrem Aussenkonus 73 in den durch die Speichenelemente 20 gebildeten Innenkonus 27 gepresst. Dabei wird der Durchmesser D1 des durch die Durchgangslöcher 24 an den Speichenelementen 20 gebildeten ersten Lochkranzes auf den Durchmesser D2 des zweiten Lochkranzes aufgeweitet und dabei wieder eine Vorspannung aufgebaut.

Fig. 7 zeigt in gleicher Darstellung wie Fig. 6 den Überlappungsbereich des Speichenelements 20 mit der Platte 70 nach erfolgter Verpressung der beiden Teile. Die Achse 26 des Durchgangslochs 24 im Schraubenkopf 22 ist nunmehr in Überdeckung mit der Achse 72 des Durchgangsloches 71 in der Platte 70. Das Einpressen der Platte 70 zwischen die Speichenelemente 20 hat damit dieselbe Wirkung wie das Verschrauben der Speichenelemente 20 mit der Radnabe 50 bei der ersten, anhand der Figuren 2 - 4 beschriebenen Ausführungsform. Auch wirkt sich die durch das Einpressen der Platte 70 erzeugte Vorspannung in gleicher Weise günstig auf die Schraubverbindungen zwischen den Speichenelementen 20 und dem Felgenkranz 10 aus.

Das Verpressen der Platte 70 mit den Speichenelementen 20 und die dabei aufgebaute Spannung genügen unter Umständen bereits zur ausreichend dauerhaften Verbindung dieser Teile, wobei sie im montierten Zustand an einer Radnabe durch die dafür verwendeten Radschrauben zusätzlich fixiert werden. Bei Bedarf könnten die Teile jedoch zusätzlich noch miteinander verschweisst oder verklebt werden.

Bei der ersten Ausführungsform wurden nur Kugelbundpassungen erwähnt. Es verseht sich dass auch kegelförmige Passungen möglich wären.

In den vorbeschriebenen Beispielen wurden lediglich Radschrauben erwähnt. Es versteht sich, dass anstelle von Radschrauben auch Radbolzen in Verbindung mit Radmuttern verwendet werden könnten.

Bei der weiteren Ausführungsform muss die Passung zwischen den Speichenelementen 20 und der Platte 70 nicht notwendig ein kreisrunder Konus sein. Gegengleiche polygone Formen wären ebenfalls möglich und sollen vom Begriff "Konus" mit umfasst sein.

Für den mit der Erfindung angestrebten Zweck der Verschiebung der Wechselbelastungen z.B. auf die erwähnten Schraubverbindungen zwischen den Querstegen 13 der Speichenelemente 20 und der Rippe 11 des Felgenkranzes 10 sowie zusätzlich ggf. der radialen Kalibrierung des Felgenkranzes genügt es bei Automobilrädern üblicher Grösse in der Regel, wenn der Versatz V absolut einige 1/10 mm zu beträgt.

Die Speichenelemente 20 sind bevorzugt einstückig ausgebildet, wobei sie beispielsweise durch Fräsen aus einem Rohling hergestellt sein können. Durch eine grössere Ausdehnung der Speichen 21 in axialer Richtung als in Umfangsrichtung ergibt sich eine hohe Stabilität gegenüber den beim Fahren auf sie einwirkenden Kräften bei gleichzeitig filigraner Ausbildung in radialer Richtung, die der Blickrichtung des Betrachters entspricht, wenn die Radkonstruktion an einem Automobil montiert ist.

### BEZEICHNUNGSLISTE

- 10: Felgenkranz
- 20: Speichenelemente
- 21: Speichen
- 22: Speichenköfe
- 23: Querstege
- 24: Durchgangslöcher
- 25: Senkungen 25 der Durchgangslöcher 24
- 26: Achse der Durchgangslöcher 24
- 27: Abschrägung, Innenkonus an Speichenelementen 20
- 30: Befestigungsschrauben
- 40: Radschrauben
- 41: Kugelbundflächen der Radschrauben 40
- 50: zentrales Teil
- 60: Radnabe
- 61: Gewindelöcher
- 62: Achse der Gewindebohrungen 61
- 70: Platte
- 71: Durchgangslöcher
- 72: Achse der Durchgangslöcher 71
- 73: abgeschrägter Abschnitt, Aussenkonus an der Platte 70
- D1: Durchmesser des erster Lochkranz
- D2: Durchmesser des zweiten Lochkranzes
- V: Versatz
- Z: Zentrum

## Patentansprüche

1. Radkonstruktion für ein Automobilmit einem Felgenkranz (10),
a. mit einem zentralen Teil (50, 60,70) und
b. mit Speichenelementen (20),
c. wobei die Speichenelemente (20) mit dem Felgenkranz (10) verbunden und einzeln mit dem zentralen Teil (50, 60,70) verbindbar sind,
d. wobei die Speichenelemente (20) mit Durchgangslöchern (24) für Radschrauben (40) oder -bolzen und der zentrale Teil (50, 60,70) mit Löchern (61, 71) zum Eindrehen oder Durchstecken derselben Radschrauben (40) oder -bolzen versehen sind,
e. wobei die Durchgangslöcher (24) der Speichenelemente (20) einen ersten Lochkranz bilden, und
f. wobei die Löcher (61, 71) im zentralen Teil (50, 60,70) einen zweiten Lochkranz bilden,
**dadurch gekennzeichnet**,
g. dass der Durchmesser (D1) des ersten Lochkranzes kleiner als der Durchmesser (D2) des zweiten Lochkranzes ist, wenn die Speichenelemente (20) nicht mit dem zentralen Teil (50, 60,70) verbunden sind, und
h. dass der Durchmesser (D1) des ersten Lochkranzes dem Durchmesser (D2) des zweiten Lochkranzes entspricht wenn die Speichenelemente (20) auch mit dem zentralen Teil (50, 60,70) verbunden sind.

2. Radkonstruktion nach Anspruch 1, **dadurch gekennzeichnet,**
a. **dass** das zentrale Teil (50, 70) eine Radnabe (60) eines Automobils ist,
b. **dass** die Durchgangslöcher (24) an den Speichenelementen (20) jeweils eine Senkung (25) in Form einer Kugel- oder Kegelbundfläche aufweisen, und
c. **dass** der Durchmesser der Durchgangslöcher (24) an den Speicherelementen (20) so gross bemessen ist, dass sich sie sich mit den entsprechenden Löchern (61) des ersten Lochkranzes in der Radnabe (60) auch dann jeweils vollständig überdecken, wenn die Speichenelemente (20) nur mit dem Felgenkranz (10), nicht aber auch mit dem zentralen Teil (60) verbunden sind.

3. Radkonstruktion nach Anspruch 1, **dadurch gekennzeichnet,**
a. **dass** das zentrale Teil (50, 70) eine Platte (70) zur Montage auf einer Radnabe eines Automobils ist,
b. **dass** die Platte (70) einen Abschnitt in Form eines Aussenkonus (73) aufweist,
c. **dass** die Speichenelemente (20) gemeinsam einen entsprechenden Innenkonus (27) bilden, und
d. **dass** die Platte (70) mit ihrem Aussenkonus (73) in diesen Innenkonus (27) unter Aufweitung des Durchmessers (D1) des durch die Durchgangslöcher (24) an den Speichenelementen (20) gebildeten zweiten Lochkranzes auf den Durchmesser (D2) des ersten Lochkranzes eingepresst ist.

4. Radkonstruktion nach einem der Ansprüche 1 - 3, **dadurch gekennzeichnet, dass** die Speichenelemente (20) mit axial ausgerichteten Befestigungsschrauben (30) mit dem Felgenkranz (10) verschraubt sind.

5. Radkonstruktion nach einem der Ansprüche 1 - 4, **dadurch gekennzeichnet, dass** die Speichenelemente (20) jeweils ein Paar von Speichen (21) aufweisen, welche am zentralen Teil (50, 60, 70) in einen mit einem der Durchgangslöcher (24) versehenen Speichenkopf (22) übergehen.

6. Radkonstruktion nach Anspruch 5, **dadurch gekennzeichnet, dass** die Speichen (21) am Felgenkranz (10) über einen Quersteg (23) miteinander verbunden sind.

7. Radkonstruktion nach den Ansprüchen 4 und 6, **dadurch gekennzeichnet, dass** der Quersteg (23) mit zweiten Durchgangslöchern für die Befestigungsschrauben (30) versehen ist.

8. Radkonstruktion nach einem der Ansprüche 1 - 7, **dadurch gekennzeichnet, dass** die Speichenelemente (20) einstückig ausgeführt sind.

9. Radkonstruktion nach einem der Ansprüche 1 - 8, **dadurch gekennzeichnet, dass** die Speichen (21) in Axialrichtung eine grössere Ausdehnung aufweisen als in Umfangsrichtung.

## Claims

1. Wheel structure for an automobile, with a wheel rim (10),
a. with a central part (50, 60, 70) and
b. with spoke elements (20),
c. wherein the spoke elements (20) are connected to the wheel rim (10) and may be individually connected to the central part (50, 60, 70),
d. wherein the spoke elements (20) are provided with through-holes (24) for wheel screws (40) or bolts and the central part (50, 60, 70) is provided with holes (61, 71) for screwing in or putting through same wheel screws (40) or bolts,
e. wherein the through-holes (24) of the spoke elements (20) form a first hole circle, and
f. wherein the holes (61, 71) in the central part (50, 60, 70) form a second hole circle,
**characterized in that**
g. the diameter (D1) of the first hole circle is smaller than the diameter (D2) of the second hole circle if the spoke elements (20) are not connected to the central part (50, 60, 70), and
h. that the diameter (D1) of the first hole circle corresponds to the diameter (D2) of the second hole circle if the spoke elements (20) are also connected to the central part (50, 60, 70).

2. Wheel structure according to claim 1, **characterized in that**
a. the central part (50, 70) is a wheel hub (60) of an automobile,
b. the through-holes (24) on the spoke elements (20) respectively have a depression (25) in the form of a spherical or comical collar surface, and
c. that the diameter of the through-holes (24) on the spoke elements (20) is dimensioned to be such that they also respectively completely overlap with the corresponding holes (61) of the first hole circle in the wheel hub (60) when the spoke elements (20) are only connected to the wheel rim (10), but not also to the central part (60).

3. Wheel structure according to Claim 1, **characterized in that**
a. the central part (50, 70) is a plate (70) for mounting on a wheel hub of an automobile,
b. the plate (70) has a section in the form of an outer taper (73),
c. the spoke elements (20) together form a corresponding inner taper (27), and
d. that the plate (70) is pressed with its outer taper (73) into this inner taper (27) with expending of the diameter (D1) of the second hole circle formed by the through-holes (24) on the spoke elements (20), to correspond to the diameter (D2) of the first hole circle.

4. Wheel structure according to one of claims 1 -- 3, **characterized in that** the spoke elements (20) are screwed to the wheel rim (10) with axially aligned fastening screws (30).

5. Wheel structure according to one of claims 1 - 4, **characterized in that** the spoke elements (20) have respectively a pair of spokes (21), which continue at the central part (50, 60, 70) into a spoke head (22) provided with one of the through-holes (24).

6. Wheel structure according to claim 5, **characterized in that** the spokes (21) are connected with one another on the wheel rim (10) via a cross web (23).

7. Wheel structure according to claims 4 and 6, **characterized in that** the cross web (23) is provided with second through-holes for the fastening screws (30).

8. Wheel structure according to one of claims 1 - 7, **characterized in that** the spoke elements (20) are embodied in one piece.

9. Wheel structure according to one of claims 1 - 8, **characterized in that** the spokes (21) have a greater extent in axial direction than in circumferential direction.

## Revendications

1. Structure de roue pour automobile, comportant une jante (10) dotée
a. d'une pièce centrale (50, 60,70) et
b. d'éléments à rayons (20),
c. les éléments à rayons (20) étant raccordés à la jante (10) et pouvant être raccordés individuellement à la pièce centrale (50, 60,70),
d. les éléments à rayons (20) étant pourvus de trous traversants (24) pour des vis (40) ou boulons de roue (50, 60,70) et la pièce centrale (61, 71) de trous permettant de visser ou de ficher lesdits vis (40) ou boulons,
e. les trous traversants (24) des éléments à rayons (20) formant une première couronne perforée et
f. les trous (61, 71) formant une seconde couronne perforée dans la pièce centrale (50, 60,70),
**caractérisée en ce que**
g. le diamètre (D1) de la première couronne perforée est inférieur au diamètre (D2) de la seconde couronne perforée lorsque les éléments à rayons (20) ne sont pas raccordés à la pièce centrale (50, 60,70) et
h. que le diamètre (D1) de la première couronne perforée équivaut au diamètre (D2) de la seconde couronne perforée lorsque les éléments à rayons (20) sont aussi raccordés à la pièce centrale (50, 60, 70).

2. Structure de roue selon la revendication 1, **caractérisée en ce que**
a. la pièce centrale (50, 70) est un moyeu (60) d'une automobile,
b. les trous traversants (24) des éléments à rayons (20) présentent respectivement un enfoncement (25) sous forme d'une surface d'entourage sphérique ou conique et
c. que le diamètre des trous traversants (24) des éléments à rayons (20) est défini de manière à ce qu'ils se recouvrent respectivement complètement avec les trous correspondants (61) de la première couronne perforée dans le moyeu (60) même quand les éléments à rayons (20) ne sont raccordés qu'à la jante (10) mais pas aussi à la pièce centrale (60).

3. Structure de roue selon la revendication 1, **caractérisée en ce que**
a. la pièce centrale (50, 70) est une plaque (70) destinée à être montée sur un moyeu d'une automobile,
b. que la plaque (70) présente une section sous forme d'un cône extérieur (73),
c. que les éléments à rayons (20) constituent ensemble un cône intérieur correspondant (27) et
d. que la plaque (70) est comprimée par son cône extérieur (73) dans ce cône intérieur (27) en élargissant le diamètre (D1) de la seconde couronne perforée formée par les trous traversants (24) au niveau des éléments à rayons (20) sur le diamètre (D2) de la première couronne perforée.

4. Structure de roue selon une des revendications 1 à 3, **caractérisée en ce que** les éléments à rayons (20) sont vissés par des vis de fixation orientée axialement (30) à la jante (10).

5. Structure de roue selon une des revendications 1 à 4, **caractérisée en ce que** les éléments à rayons (20) présentent respectivement une paire de rayons (21) qui transitent au niveau de la pièce centrale (50, 50, 70) dans une tête de rayon (22) pourvue d'un des trous traversants (24).

6. Structure de roue selon la revendication 5, **caractérisée en ce que** les rayons (21) sont raccordés entre eux au niveau de la jante (10) par une traverse (23).

7. Structure de roue selon les revendications 4 et 5, **caractérisée en ce que** la traverse (23) est pourvue de seconds trous traversants pour les vis de fixation (30).

8. Structure de roue selon une des revendications 1 à 7, **caractérisée en ce que** les éléments à rayons (20) sont monobloc.

9. Structure de roue selon une des revendications 1 - 8, **caractérisée en ce que** les rayons (21) présentent dans le sens axial une extension plus grande que dans le sens circonférentiel.
